# EUROPÄISCHE PATENTSCHRIFT

(11) **EP 1 186 730 B1**
(45) Veröffentlichungstag und Bekanntmachung des Hinweises auf die Patenterteilung: **04.06.2003**
(21) Anmeldenummer: 01129494.9
(22) Anmeldetag: 13.11.1998
(51) Int. Cl.: E04G 23/02

(54) **Verstärkungselement für lastaufnehmende oder lastübertragende Bauteile sowie Verfahren zu dessen Befestigung an einer Bauteiloberfläche**
Reinforcement element for load-carrying or load-transferring structural parts and method for fixing said reinforcement element to the surface of a structural part
Elément de renforcement pour composants de support de charge ou de transmission de charge, ainsi que procédé pour sa fixation sur une surface de composant

(30) Priorität: 02.12.1997 DE 19753318
(43) Veröffentlichungstag der Anmeldung: 13.03.2002
(62) Teilanmeldung aus: 98963453.0
(73) Patentinhaber: Sika Schweiz AG, 8048 Zürich (CH)
(72) Erfinder: Steiner, Werner, 8405 Winterthur (CH); Bleibler, Alexander, 8406 Winterthur (CH)
(74) Vertreter: Wolf, Eckhard, Dr.-Ing.

(56) Entgegenhaltungen:
- WO-A-93/20296
- WO-A-96/21785
- WO-A-97/21009

## Beschreibung

Die Erfindung betrifft ein Verstärkungselement für lastaufnehmende oder lastübertragende Bauteile mit einer an einer Bauteiloberfläche mittels einer Klebstoffschicht befestigbaren Flachbandlamelle, die aus einer Vielzahl von in eine Bindemittelmatrix eingebetteten, parallel zueinander und zur Lamellenlängsrichtung ausgerichteten Tragfasern besteht, wobei die Flachbandlamelle mit ihren freien Enden in je eine mittels Befestigungsorganen am Bauteil oder an einem Spannbalken verankerbare Ankerlasche eingreift und an dieser gegen In Lamellenlängsrichtung angreifende Zug- und Scherkräfte gesichert ist.

Die vorzugsweise aus Kohlenstoffasem bestehenden Tragfasern verleihen den Flachbandlamellen eine große elastische Dehnbarkeit.

Es ist ein Verstärkungselement dieser Art bekannt (WO-A 97/21009), bei welchem der Kraftfluß von der Flachbandlamelle zum Bauelement über eine kauschenartige, selbsthemmende Klemmvorrichtung mit einer keilförmigen Ankerlasche erfolgt.

Der Erfindung liegt die Aufgabe zugrunde, ein Verstärkungselement der eingangs angegebenen Art zu entwickeln, womit eine aufgeprägte Zugspannung während und nach dem Aushärten des Klebstoffes zuverlässig aufrechterhalten werden kann.

Zur Lösung dieser Aufgabe wird gemäß der Erfindung vorgeschlagen, daß die Ankerlaschen ein zumindest partiell biegsames Rohr und zwei in das Rohr eingepreßte Keilelemente aufweisen, und daß das jeweilige Lamellenende zwischen den einander zugewandten Keilflächen der Keilelemente eingespannt und mit diesen verklebt ist. Zusätzlich können auch die Keilelemente in das Rohr eingeklebt werden. Ein zusätzlicher Formschluß wird dadurch erzielt, daß die einander zugewandten Keilflächen in Lamellenlängsrichtung komplementär zueinander gekrümmt sind. Dabei ist es vorteilhaft, wenn eines der beiden Keilelemente sich nur über einen Teil der Rohrlänge erstreckt und das andere Keilelement eine an seine Keilfläche vorzugsweise tangential anschließende, die Flachbandlamelle gegen eine bauteilseitige Rohrwandung haltende und mit dieser und der Flachbandlamelle verklebte und/oder verspannte Keilfläche aufweist. Das Rohr weist bevorzugt einen rechteckigen Innenquerschnitt auf. Um eine optimale Flexibilität der Ankerlasche zu erzielen, kann das Rohr als Wickelrohr aus glasfaserverstärktem Kunststoff ausgebildet werden. Eine weitere Verbesserung in dieser Hinsicht wird dadurch erzielt, daß auch die Keilelemente aus glasfaserverstärktem Kunststoff bestehen.

Eine weitere vorteilhafte Ausgestaltung der Erfindung sieht vor, daß das Rohr und die Keilelemente mit seitlich außerhalb des Lamellenendes befindlichen Querbohrungen für den Durchtritt von Befestigungs- und Spannschrauben versehen sind. Um die Biegsamkeit der Ankerlaschen zum eintrittsseitigen Rohrende hin zu vergrößeren, ist es von Vorteil, wenn das mit den Keilelementen bestückte Rohr einen Endabschnitt mit zum eintrittsseitigen Rohrende in abnehmender Dicke oder Breite aufweist.

Eine weitere bevorzugte Ausgestaltung der Erfindung sieht vor, daß die Ankerlaschen zumindest im Eintrittsbereich der Flachbandlamelle elastisch ausgebildet sind. Mit dieser Maßnahme ist es möglich, die im Übergangsbereich auftretenden Schubspannungen auf einem zulässigen Maß zu halten, indem die Dehnungen innerhalb des Endabschnitts allmählich abgebaut werden. Um dies zu erreichen, ist es von Vorteil, wenn die Steifigkeit im Endabschnitt der Ankerlaschen zur Eintrittsstelle der Flachbandlemelle hin stetig abnimmt.

Um einen dünnschichtigen Klebstoffauftrag zu ermöglichen, wird gemäß einer vorteilhaften Ausgestaltung der Erfindung vorgeschlagen, daß die Ankerlaschen eine sich mindestens über die Lamellenbreite erstreckende, außenseitig ebene dünnwandige Bodenpartie und eine gegenüber der Bodenpartie dickwandigere Deckpartie aufweisen. Zur Herstellung einer formschlüssigen Verbindung können die Lamellenenden je eine Verbreiterung und/oder Verdickung und die Ankerlaschen eine Ausnehmung zur formschlüssigen Aufnahme der Verbreiterung und/oder Verdickung aufweisen. Zweckmäßig ist dabei die Deckpartie mit der Ausnehmung zur Aufnahme der Verbreiterung und/oder Verdickung der Flachbandlamelle versehen.

Eine bevorzugte Ausgestaltung der Erfindung sieht vor, daß die Verbreiterung und/oder Verdickung durch zum freien Lamellenende hin divergierendes Aufspreizen der Tragfasem und gegebenenfalls durch eine Aufweitung der Bindemittelmatrix in diesem Bereich gebildet ist. Die Verbreiterung und/oder Verdickung kann aber auch durch einen Materialauftrag, vorzugsweise aus Kunststoff, an den Lamellenenden gebildet werden.

Eine weitere vorteilhafte Ausgestaltung der Erfindung sieht vor, daß die Ankerlaschen einen an den Endabschnitt anschließenden Verankerungsabschnitt aufweisen, der mit seitlich außerhalb des dort befestigten Lamellenendes befindlichen Querbohrungen zum Hindurchstecken der Verankerungsschrauben versehen ist.

Gemäß einer weiteren bevorzugten Ausgestaltung der Erfindung ist die Flachbandlamelle mit einem elektrischen Strom beaufschlagbar. Dazu sind zweckmäßig die Ankerlaschen elektrisch leitfähig ausgebildet und bilden eine Kontaktstelle für den Anschluß der Kohlenstoffasern an eine elektrische Stromquelle. Auf diese Weise ist es möglich, das Aushärten des Klebstoffs durch ohmsche Aufheizung der Flachbandlamelle zu beschleunigen und die Temperaturbeständigkeit zu erhöhen.

Die Bindemittelmatrix der Flachbandlamelle besteht zweckmäßig aus einem Duroplast, vorzugsweise Epoxidharz. Grundsätzlich kann die Bindemittelmatrix auch aus einem Thermoplast, vorzugsweise aus der Gruppe Polyolefine, Vinylpolymere, Polyamide, Polyester, Polyacetate, Polycarbonate und thermoplastische Polyurethane bestehen. Die Tragfasern können, wie bereits erwähnt, aus Kohlenstoffasem bestehen. Grundsätzlich können die Tragfasern auch als Aramidfasern, Glasfasern und/oder Polypropylenfasern ausgebildet sein.

Zur Aufrechterhaltung einer Vorspannung in den Flachbandlamellen werden die Lamellenenden zunächst mit einer Ankerlasche kraft-, form- und/oder stoffschlüssig verbunden. Gemäß einer ersten Verfahrensalternative wird außerdem vorgeschlagen, daß eine der Ankerlaschen am Bauteil befestigt, beispielsweise angeschraubt und/oder verklebt wird, während die andere Ankerlasche vor oder nach dem Klebstoffauftrag von einem am Bauteil angeordneten Spannmechanismus erfaßt und zur Erzeugung einer elastischen Vorspannung in der Flachbandlamelle mit einer In Lamellenlängsrichtung ausgerichteten Zugspannung beaufschlagt wird, wobei die auf diese Weise vorgespannte Flachbandlamelle mit ihrer Klebstoffschicht bis zum Aushärten des Klebstoffs gegen die Bauteiloberfläche gehalten oder gepreßt wird.

Eine zweite Verfahrensalternative sieht vor, daß die Ankerlaschen unter Erzeugung einer elastischen Vorspannung in der Flachbandlamelle zunächst an einem Spannbalken fixiert werden, und daß der Spannbalken mit der Klebstoffseite der Flachbandlamelle sodann gegen die Bauteiloberfläche gepreßt oder gehalten wird, bis der Klebstoff ausgehärtet ist. Gemäß einer bevorzugten Ausgestaltung der Erfindung wird während des Aushärtens des Klebstoffs zumindest durch einen Teil der Tragfasem zur Aufheizung der Flachbandlamelle und der Klebstoffschicht ein elektrischer Strom hindurchgeleitet.

Zur Herstellung des Formschlusses zwischen den Lamellenenden und den Ankerlaschen können die Kohlenstoffasem an den Enden der zuvor abgelängten Flachbandlamelle von der Bindemittelmatrix vorzugsweise durch Verdampfen befreit, unter Bildung einer Verbreiterung und/oder Verdickung aufgespreizt und in dieser Lage mit einem viskosen, aushärtbaren Bindemittel fixiert werden. Die von der Bindemittelmatrix befreiten Kohlenstoffasem werden dabei zweckmäßig zum freien Lamellenende hin divergierend aufgespreizt. Die von der Bindemittelmatrix befreiten Kohlenstoffasem werden zu diesem Zweck vorteilhafterweise in eine hinterschnittene Ausnehmung der Ankeriaschen eingeführt und dort mit einem viskosen, aushärtbaren, zugleich als Klebstoff dienenden Bindemittel lagefixiert und verankert. Die Ankerlaschen werden nach Erreichen einer vorgegebenen Vorspannkraft am Bauteil oder am Spannbalken befestigt, vorzugsweise angeschraubt und angeklebt.

Im folgenden wird die Erfindung anhand der in der Zeichnung in schematischer Weise dargestellten Ausführungsbeispiele näher erläutert. Es zeigen
- Fig. 1: einen Schnitt durch ein Bauteil, an welchem ein vorgespanntes, als Flachbandlamelle ausgebildetes Verstärkungselement mit einem Klebstoff unter Verwendung einer Heizvorrichtung befestigt wird;
- Fig. 2a: einen senkrechten Schnitt durch das Verstärkungselement im Bereich einer Ankerlasche;
- Fig. 2b: einen Schnitt entlang der Trennlinie B-B der Fig. 2a;
- Fig. 2c: einen Schnitt entlang der Schnittlinie C-C der Fig. 2a;
- Fig. 3a: eine ausschnittsweise Draufsicht auf ein abgewandeltes Verstärkungselement im Bereich der Ankerlasche;
- Fig. 3b: einen Schnitt entlang der Schnittlinie III-III der Fig. 3a;
- Fig. 4a: eine schaubildliche Darstellung eines Verstärkungselements im Bereich der Ankerlasche;
- Fig. 4b: einen Längsschnitt durch das Verstärkungselement nach Fig. 4a im Bereich der Ankerlasche.

Die in der Zeichnung dargestellten Verstärkungselemente 8 sind zur nachträglichen Verstärkung von Bauteilen 12 beispielsweise aus Stahlbeton, Holz oder Mauerwerk bestimmt. Sie weisen eine Flachbandlamelle 10 auf, die mit ihrer einen Breitseite 14 mit Hilfe eines vorzugsweise aus Epoxidharz bestehenden Klebstoffs 16 an der Oberfläche des Bauteils 12 befestigt wird.

Die Flachbandlamelle 10 weist eine Verbundstruktur aus einer Vielzahl von parallel zueinander ausgerichteten, biegsamen oder biegeschlaffen Tragfasern 26 vorzugsweise aus Kohlenstoff und aus einer die Tragfasem 26 schubfest miteinander verbindenden Bindemittelmatrix 28 vorzugsweise aus Epoxidharz auf. Die Bindemittelmatrix 28 sorgt dafür, daß die Flachbandlamelle 10 steifelastisch ausgebildet ist.

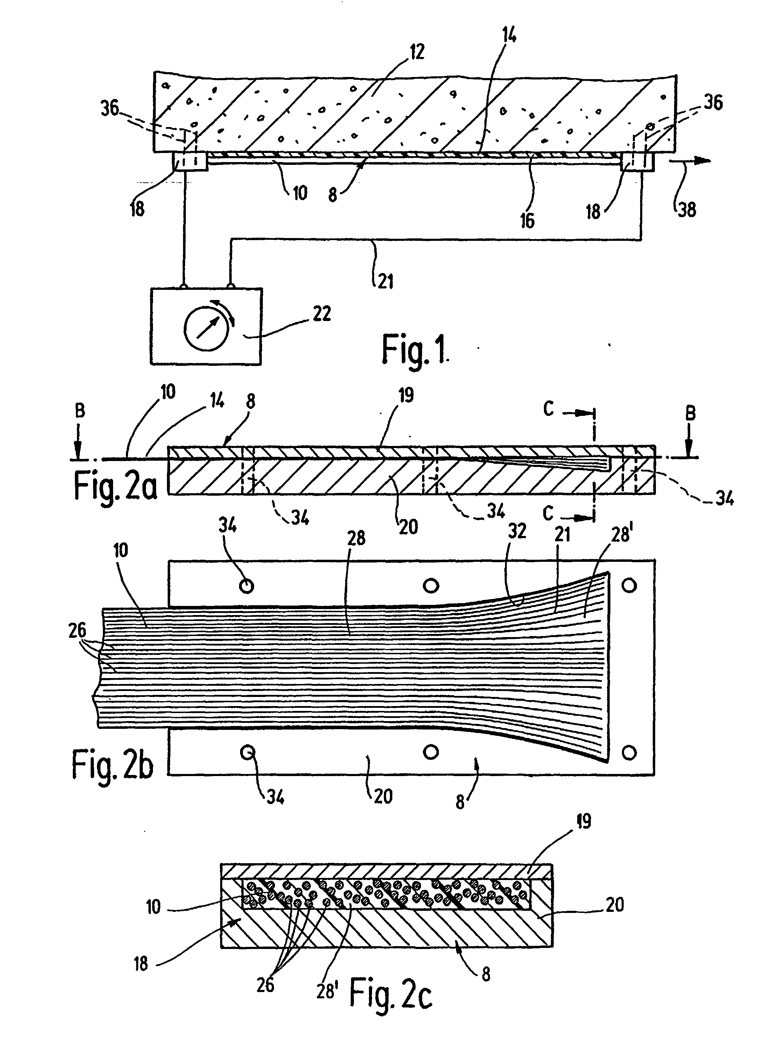

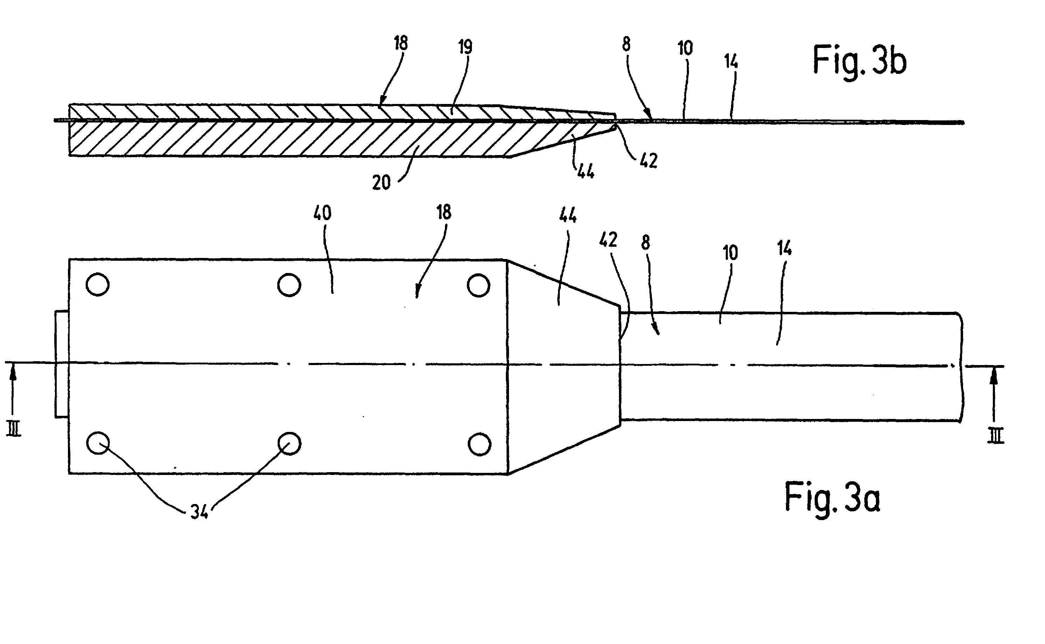

Das Verstärkungselement 8 ist an den Enden der Flachbandlamelle 10 mit je einer Ankerlasche 18 ausgestattet. Die Ankerlasche 18 ist bei den in Fig. 2a bis c und 3a und b gezeigten Ausführungsbeispielen aus einer dünnwandigen Bodenpartie 19 und einer dickwandigen Deckpartie 20 zusammengesetzt. Die Wandstärke der Bodenpartie 19 der Ankerlaschen 18 ist so bemessen, daß sie etwa der Klebstoffschichtstärke im montierten Zustand der Flachbandlamelle 10 entspricht.

Bei dem in Fig. 2a bis c gezeigten Ausführungsbeispiel weist die Flachbandlamelle 10 an ihren Enden eine durch Aufspreizen der Tragfasern 26 gebildete Verbreiterung und Verdickung 21 auf, die in eine entsprechende Ausnehmung 32 in der Deckpartie 20 der Ankerlasche 22 eingepaßt ist. Die Verbreiterung und Verdickung 21 in den Lamellenenden kann dadurch erzeugt werden, daß zunächst die Bindemittelmatrix 28 unter Freilegen der Tragfasem 26 ausgedampft wird und daß die Tragfasern 26 sodann in die Ausnehmung 32 der Deckpartie 20 eingelegt und dort mit Hilfe eines zugleich als Klebstoff dienenden Bindemittelharzes 28' fixiert werden. Zur Verbindung der Bodenpartie 19 und der Deckpartie 20 sind in den beiden Teilen miteinander fluchtende Schraublöcher 34 vorgesehen, die zugleich zur Befestigung der Ankerlasche am Bauteil 12 mit Hilfe hochfester Schrauben 36 bestimmt sind.

Zur Anbringung des Verstärkungselements 8 an dem Bauteil 12 wird zunächst eine der Ankerlaschen 18 mittels Schrauben an dem Bauteil 12 befestigt, während die andere Ankerlasche 18 von einem nicht dargestellten Spannmechanismus erfaßt wird. Sodann wird die von dem Spannmechanismus erfaßte Ankerlasche 18 in Richtung des Pfeils 38 gezogen und dabei die Flachbandlamelle 10 auf ein gewünschtes Maß elastisch vorgespannt. Die zweite Ankerlasche 18 wird nach dem Vorspannen ebenfalls mit hochfesten Ankerschrauben 36 und Klebstoff am Bauteil 12 verankert. Sodann wird die Flachbandlamelle zusammen mit dem zuvor in viskoser Form aufgetragenen Klebstoff 16 gegen die Bauteiloberfläche gepreßt, bis der Klebstoff ausgehärtet ist.

Um die Aushärtungszeit des Klebstoffs 16 zu beschleunigen, kann die Flachbandlamelle 10 mit Hilfe eines elektrischen Stroms aufgeheizt werden. Zu diesem Zweck können die elektrisch leitfähigen Ankerlaschen 18 als Kontaktstellen benutzt und über die Leitungen 21 an eine Stromquelle 22 angeschlossen, so daß ein elektrischer Strom durch die mit den Ankerlaschen 18 kontaktierten Kohlenstoffasem 26 hindurchgeleitet werden kann. Die Kohlenstoffasern 26 bilden einen Heizwiderstand zur Aufheizung der Flachbandlamelle 10 und des Klebstoffs 16. Zur Temperaturüberwachung kann an die Flachbandlamelle ein nicht dargestellter Temperaturfühler angekoppelt werden, dessen Ausgangssignal zur Steuerung oder Regelung der Heizleistung verwendet werden kann.

Bei dem in Fig. 3a und b gezeigten Ausführungsbeispiel sind die Bodenpartie 19 und die Deckpartie 20 mit ebenen Spannflächen versehen, die mit einander und mit der zwischengelegten Flachbandlamelle 10 verklebt sind. Die Bodenpartie 19 und die Deckpartie 20 bestehen aus einem biegsamen Kunststoffmaterial, z.B. aus glasfaserverstärktem Kunststoff. Die Ankerlasche ist in einen verbreiterten, mit Querbohrungen 34 für den Durchtritt von Befestigungsschrauben versehenen Verankerungsabschnitt 40 und einen sich zur Eintrittsstelle 42 der Flachbandlamelle 10 hin sowohl in der Wandstärke als auch in der Breite verjüngenden Endabschnitt 44 unterteilt. Die abnehmende Dicke und Breite der Bodenpartie 19 und der Deckpartie 20 im Bereich des Endabschnitts 44 sorgen dafür, daß die Steifigkeit der biegsamen Lasche zur Eintrittsstelle 42 hin kontinuierlich abnimmt, so daß Lamellendehnungen, die aufgrund einer aufgeprägten Zugpressung entstehen, in diesem Bereich allmählich abgebaut werden. Dadurch wird sichergestellt, daß zwischen Lamelle und Verankerung keine unzulässig hohe Schubspannung auftritt, die zu einer frühzeitigen Ablösung der Lamelle führen könnte.

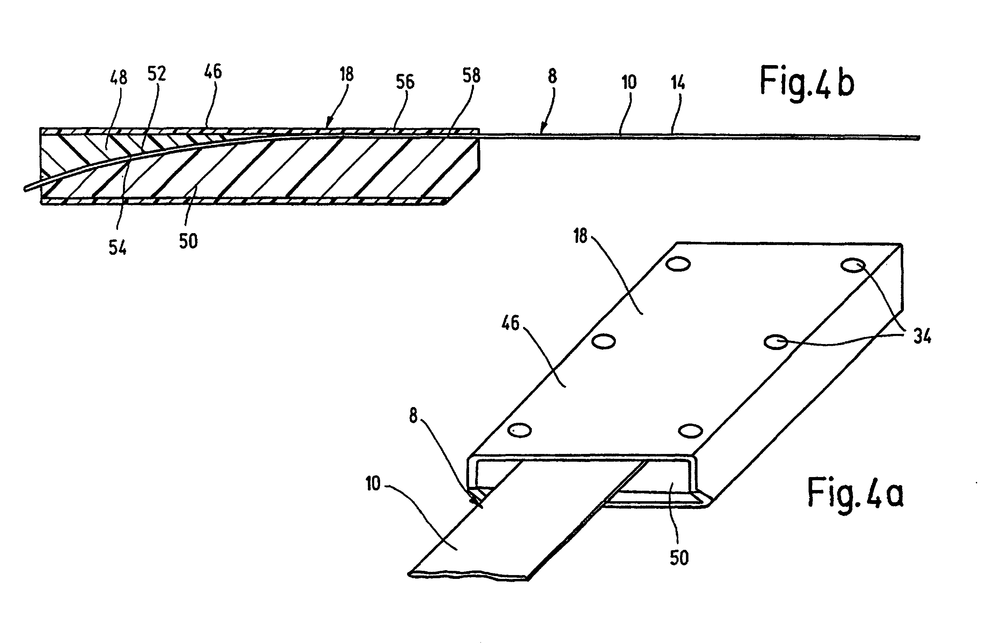

Bei dem in Fig. 4a und b gezeigten Ausführungsbeispiel bestehen die Ankerlaschen 18 aus einem Wickelrohr 46 aus glasfaserverstärktem Kunststoff mit rechteckigem Innenquerschnitt sowie zwei vorgefertigten Keilelementen 48, 50, die ebenfalls aus glasfaserverstärktem Kunststoff bestehen können. Die einander zugewandten Keilflächen 52, 54 der Keilelemente 48, 50 sind in Lamellenlängsrichtung so komplementär zueinander gekrümmt, daß die zwischen sie eingespannte und mit ihnen verklebte Flachbandlamelle 10 knickfrei zwischen den Keilflächen hindurchgeführt ist. Eines der beiden Keilelemente 48 erstreckt sich nur über einen Teil des Wickelrohrs 46, während das andere Keilelement 50 eine an seine Keilfläche 54 tangential anschließende, die Flachbandlamelle 10 gegen die bauteilseitige Rohrwandung 56 haltende und mit dieser und der Flachbandlamelle verklebte und verspannte ebene Teilfläche 58 aufweist. Dank der weitgehend frei wählbaren Anordnung der Fasern in dem Wickelrohr 46 und einer am eintrittsseitigen Ende 42 vorgesehenen Schräge kann auch hier der Steifigkeitsverlauf der Ankerlasche definiert eingestellt werden. Die von der Eintrittsstelle 42 aus zum lastentfemten Ende hin größer werdende Krümmung der Flachbandlamelle 10 und die Verklebung und Verkeilung mit der Lamelle und dem Wickelrohr führt zu einer zuverlässigen formschlüssigen Verankerung der Ankerlaschen an der Flachbandlamelle. Die Keilelemente 48, 50 werden zusätzlich durch die durchgehenden Befestigungsbohrungen 34 in ihrer Lage gegenüber dem Wickelrohr 46 fixiert.

Zusammenfassend ist folgendes festzuhalten: Die Erfindung bezieht sich auf ein Verstärkungselement 8 für lastaufnehmende oder lastübertragende Bauteile 12. Das Verstärkungselement weist eine Flachbandlamelle 10 auf, die aus einer Vielzahl von in eine Bindemittelmatrix 28 eingebetteten, parallel zueinander und zur Lamellenlängsrichtung ausgerichteten Tragfasem 26 besteht. Um die Flachbandlamelle 10 mit einer aufgeprägten Vorspannung am Bauteil 12 befestigten zu können, greift sie mit ihren freien Enden in je eine mittels Befestigungsorganen 36 am Bauteil 12 verankerbare Ankerlasche 18 ein und ist an dieser gegen in Lamellenlängsrichtung eingreifende Zug- und Scherkräfte gesichert.

## Patentansprüche

1. Verstärkungselement für lastaufnehmende oder lastübertragende Bauteile (12) mit einer an einer Bauteiloberfläche mittels einer Klebstoffschicht (16) befestigbaren Flachbandlamelle (10), die aus einer Vielzahl von in eine Bindemittelmatrix (28) eingebetteten, parallel zueinander und zur Lamellenlängsrichtung ausgerichteten Tragfasem (26) besteht, wobei die Flachbandlamelle (10) mit ihren freien Enden in je eine mittels Befestigungsorganen (36) am Bauteil (12) oder an einem Spannbalken verankerbare Ankerlasche (18) eingreift und an dieser gegen in Lamellenlängsrichtung angreifende Zug- und Scherkräfte gesichert ist, **dadurch gekennzeichnet, daß** die Ankerlaschen (18) ein zumindest partiell biegsames Rohr (46) und zwei in das Rohr (46) eingepreßte Keilelemente (48,50) aufweisen und daß das jeweilige Lamellenende zwischen den einander zugewandten Keilflächen (52,54) der Keilelemente (48,50) eingespannt und mit diesen verklebt ist.

2. Verstärkungselement nach Anspruch 1, **dadurch gekennzeichnet, daß** die Keilelemente (48, 50) in das Rohr (46) eingeklebt sind.

3. Verstärkungselement nach Anspruch 1 oder 2, **dadurch gekennzeichnet, daß** die einander zugewandten Keilflächen (52, 54) in Lamellenlängsrichtung komplementär zueinander gekrümmt sind.

4. Verstärkungselement nach einem der Ansprüche 1 bis 3, **dadurch gekennzeichnet, daß** eines der beiden Keilelemente (48) sich nur über einen Teil der Rohrlänge erstreckt und daß das andere Keilelement (50) eine an seine Keilfläche (54) vorzugsweise tangential anschließende, die Flachbandlamelle gegen eine bauteilseitige Rohrwandung (56) haltende und mit dieser und der Flachbandlamelle verklebte und/oder verspannte Teilfläche (58) aufweist.

5. Verstärkungselement nach einem der Ansprüche 1 bis 4, **dadurch gekennzeichnet, daß** das Rohr (46) als Wickelrohr aus glasfaserverstärktem Kunststoff ausgebildet ist.

6. Verstärkungselement nach einem der Ansprüche 1 bis 5, dadurch gekenn- zeichnet, daß die Keilelemente (48, 50) aus glasfaserverstärktem Kunststoff bestehen.

7. Verstärkungselement nach einem der Ansprüche 1 bis 6, **dadurch gekennzeichnet, daß** das Rohr (46) und die Keilelemente (48, 50) mit seitlich außerhalb des Lamellenendes befindlichen Querbohrungen (34) für den Durchtritt von Befestigungsschrauben (36) versehen sind.

8. Verstärkungselement nach einem der Ansprüche 1 bis 7, **dadurch gekennzeichnet, daß** das mit den Keilelementen (48,50) bestückte Rohr einen Endabschnitt (44) mit zum eintrittsseitigen Ende hin abnehmender Dicke und/oder Breite aufweist.

9. Verstärkungselement nach einem der Ansprüche 1 bis 8, **dadurch gekennzeichnet, daß** die Ankerlaschen (18) zumindest im Eintrittsbereich (42, 44) der Flachbandlamelle (10) elastisch bieg- und dehnbar sind und daß die Steifigkeit in einem Endabschnitt (44) der Ankerlaschen (18) zur Eintrittsstelle (42) der Flachbandlamelle hin stetig abnimmt.

10. Verstärkungselement nach einem der Ansprüche 1 bis 9, **dadurch gekennzeichnet, daß** die Lamellenenden je eine Verbreiterung und/oder Verdickung (21) und die Ankerlaschen (18) eine Ausnehmung (32) zur formschlüssigen Aufnahme der Verbreiterung und/oder Verdickung (21) aufweisen.

11. Verstärkungselement nach einem der Ansprüche 1 bis 10, **dadurch gekennzeichnet, daß** die Ankerlaschen (18) eine dünnwandige, außenseitig ebene Bodenpartie (19) und eine gegenüber der Bodenpartie dickwandigere Deckpartie (20) aufweisen.

12. Verstärkungselement nach Anspruch 11, **dadurch gekennzeichnet, daß** die Ankerlaschen sich mindestens über die Lamellenbreite erstrecken.

13. Verstärkungselement nach einem der Ansprüche 10 bis 12, **dadurch gekennzeichnet, daß** die Verbreiterung und/oder Verdickung (21) durch zum freien Lamellenende hin divergierendes Aufspreizen der Tragfasem (26) gebildet ist.

14. Verstärkungselement nach einem der Ansprüche 10 bis 13, **dadurch gekennzeichnet, daß** die Verbreiterung und/oder Verdickung (21) durch eine Aufweitung der Bindemittelmatrix (28') gebildet ist.

15. Verstärkungselement nach einem der Ansprüche 10 bis 14, **dadurch gekennzeichnet, daß** die Verbreiterung und/oder Verdickung (21) durch einen Materialauftrag vorzugsweise aus Kunstharz gebildet ist.

16. Verstärkungselement nach einem der Ansprüche 1 bis 15, **dadurch gekennzeichnet, daß** die Ankerlaschen (18) mit Querbohrungen (34) für den Durchtritt hochfester Befestigungsschrauben (36) versehen sind.

17. Verstärkungselement nach einem der Ansprüche 11 bis 16, **dadurch gekennzeichnet, daß** die Wandstärke und/oder die Breite der Deckpartie (20) und/oder der Bodenpartie (19) im Endabschnitt (44) der Ankerlasche (18) zur Eintrittsstelle (42) der Flachbandlamelle hin abnimmt.

18. Verstärkungselement nach einem der Ansprüche 1 bis 17, **dadurch gekennzeichnet, daß** die Ankerlaschen (18) einen an den Endabschnitt (44) anschließenden Verankerungsabschnitt (40) aufweisen, der mit seitlich außerhalb des dort befestigten Lamellenendes befindlichen Querbohrungen (34) zum Hindurchstecken der Verankerungsschrauben (36) versehen ist.

19. Verstärkungselement nach einem der Ansprüche 11 bis 18, **dadurch gekennzeichnet, daß** die Wandstärke der Bodenpartie (19) der Ankerlaschen (18) an der Eintrittsstelle (42) der Schichtdicke der anschließenden Klebstoffschicht (16) entspricht.

20. Verstärkungselement nach einem der Ansprüche 1 bis 19, **dadurch gekennzeichnet, daß** die Flachbandlamelle durch einen elektrischen Strom aufheizbar ist.

21. Verstärkungselement nach Anspruch 20, **dadurch gekennzeichnet, daß** die Ankerlaschen (18) elektrisch leitfähig sind und eine Kontaktstelle für den Anschluß der vorzugsweise aus Kohlenstoffasern (20) bestehenden Tragfasern an eine elektrische Stromquelle (22) bilden.

22. Verstärkungselement nach einem der Ansprüche 1 bis 21, **dadurch gekennzeichnet, daß** mindestens eine der Ankerlaschen (18) ein als Widerlager für eine in Lamellenlängsrichtung angreifende Spannvorrichtung dienende Schulter aufweist.

23. Verstärkungselement nach einem der Ansprüche 1 bis 22, **dadurch gekennzeichnet, daß** die Bindemittelmatrix aus einem Duroplast, vorzugsweise aus Epoxidharz besteht.

24. Verstärkungselement nach einem der Ansprüche 1 bis 23, **dadurch gekennzeichnet, daß** die Bindemittelmatrix aus einem Thermoplast, vorzugsweise aus der Gruppe Polyolefine, Vinylpolymere, Polyamide, Polyester, Polyacetate, Polycarbonate und thermoplastische Polyurethane besteht.

25. Verstärkungselement nach einem der Ansprüche 1 bis 24, **dadurch gekennzeichnet, daß** die Tragfasem (26) als Kohlenstoffasern, Aramidfasern, Glasfasern und/oder Polypropylenfasern ausgebildet sind.

26. Verstärkungselement nach einem der Ansprüche 1 bis 25, **dadurch gekennzeichnet, daß** die Tragfasern (26) als Kohlenstoffasern, Aramidfasern, Glasfasern und/oder Polypropylenfasern ausgebildet sind.

27. Verfahren zur Befestigung eines Verstärkungselements nach einem der Ansprüche 1 bis 26 an der Oberfläche eines Bauteils (12), bei welchem die Flachbandlamelle (10) mit einer Breitseite über eine in viskoser Konsistenz aufgetragene, vorzugsweise aus einem Reaktionsharz bestehende Klebstoffschicht (16) gegen eine Bauteiloberfläche gepreßt und die Klebstoffschicht unter Herstellung einer Klebeverbindung ausgehärtet wird, und bei welchem die Lamellenenden mit einer Ankerlasche (18) kraft-, formund/oder stoffschlüssig verbunden werden und eine der Ankerlaschen (18) am Bauteil befestigt wird, **dadurch gekennzeichnet, daß** die andere Ankerlasche (18) vor oder nach dem Klebstoffauftrag von einem bauteilfesten Spannmechanismus erfaßt und unter Erzeugung einer elastischen Verformung in der Flachbandlamelle (10) mit einer in Lamellenlängsrichtung (38) ausgerichteten Zugkraft beaufschlagt wird, und daß die auf diese Weise vorgespannte Flachbandlamelle mit ihrer Klebstoffschicht (16) bis zum Aushärten des Klebstoffs gegen die Bauteiloberfläche gehalten oder gepreßt wird.

28. Verfahren zur Befestigung eines Verstärkungselements nach einem der Ansprüche 1 bis 26 an der Oberfläche eines Bauteils (12), bei welchem die Flachbandlamelle (10) mit einer Breitseite über eine in viskoser Konsistenz aufgetragene, vorzugsweise aus einem Reaktionsharz bestehende Klebstoffschicht (16) gegen eine Bauteiloberfläche gepreßt und die Klebstoffschicht unter Herstellung einer Klebeverbindung ausgehärtet wird, und bei welchem die Lamellenenden mit einer Ankerlasche (18) kraft-, form- und/oder stoffschlüssig verbunden werden, **dadurch gekennzeichnet, daß** die Ankerlaschen (18) unter Erzeugung einer elastischen Vorspannung in der Flachbandlamelle (10) zunächst an einem Spannbalken fixiert werden, daß der Spannbalken mit der Klebstoffseite der Flachbandlamelle (10) gegen die Bauteiloberfläche gepreßt oder gehalten wird, bis der Klebstoff aus-gehärtet ist und daß anschließend der Spannbalken von der Flachbandlamelle abgenommen wird.

29. Verfahren nach Anspruch 27 oder 28, **dadurch gekennzeichnet, daß** während des Aushärtens des Klebstoffs (16) zumindest durch einen Teil der als Kohlenstoffasem (26) ausgebildeten Tragfasem (26) zur Aufheizung der Flachbandlamelle (10) und der Klebstoffschicht (16) ein elektrischer Strom hindurchgeleitet wird.

30. Verfahren nach einem der Ansprüche 27 bis 29, **dadurch gekennzeichnet, daß** die Lamellenenden vor der Verbindung mit den Ankerlaschen (18) mit einer Verbreiterung und/oder Verdickung (21) versehen werden.

31. Verfahren nach Anspruch 30, **dadurch gekennzeichnet, daß** die Kohlenstoffasem (26) an den Enden der zuvor abgelängten Flachbandlamelle (10) von der Bindemittelmatrix (28) vorzugsweise durch Verdampfen befreit, unter Bildung einer Verbreiterung und/oder Verdickung (21) aufgespreizt und in dieser Lage mit einem viskosen, aushärtbaren Bindemittel (28') fixiert werden.

32. Verfahren nach Anspruch 31, **dadurch gekennzeichnet, daß** die von der Bindemittelmatrix befreiten Kohlenstoffasern (26) zum freien Lamellenende hin divergierend aufgespreizt werden.

33. Verfahren nach Anspruch 30 oder 31, **dadurch gekennzeichnet, daß** die von der Bindemittelmatrix befreiten Kohlenstoffasern (26) in eine hinterschnittene Ausnehmung (32) der Ankerlaschen (18) eingeführt und dort mit einem viskosen, aushärtbaren, zugleich als Klebstoff dienenden Bindemittel (28') lagefixiert und verankert werden.

34. Verfahren nach einem der Ansprüche 27 bis 33, **dadurch gekennzeichnet, daß** die zweite Ankerlasche (18) nach Erreichen einer vorgegebenen Vorspannkraft (Pfeil 38) am Bauteil (12) oder am Spannbalken befestigt, vorzugsweise angeschraubt wird.

## Claims

1. Reinforcing element for load-bearing or load-transmitting structural components (12) comprising a flat strip lamella secured to a structural component outer surface by means of an adhesive layer (16), which flat strip lamella is comprised of a plurality of parallel to each other and parallel to the lamella longitudinal direction oriented reinforcing fibers (26) embedded in a binder matrix (28), wherein the respective free ends of the flat strip lamella (10) are in engagement with respectively one anchor plate (18) which is anchorable to a construction component (12) or a tension beam by means of securing means (36), which anchor plate protects the lamella against tensile and sheer forces acting upon the lamella in the longitudinal direction, **characterized in that** the anchor plates (18) include an at least partially flexible tube (46) and two wedge elements (48, 50) pressed into the tube (46), and that the respective lamella ends are tensioned between the wedge surfaces (53, 54) of the wedge elements (48, 50) facing each other, and are adhered thereto.

2. Anchoring element according to Claim 1, **characterized in that** the wedge elements (48, 50) are adhered in the tube (46).

3. Anchoring element according to Claim 1 or 2, **characterized in that** the wedge surfaces facing each other (52, 54) in the lamella longitudinal direction are curved complimentarily to each other.

4. Anchoring element according to one of Claims 1 through 3, **characterized in that** one of the two wedge elements (48) extends only over a part of the tube length and that the other wedge element (50) exhibits a partial surface preferably adjoining tangentially to its wedge surface (54), which holds the flat strip lamella against a structural-component-facing side of the tube wall (56) and such that the flat strip lamella is adhered and/or tensioned with the tube wall and the wedge partial surface.

5. Anchoring element according to one of Claims 1 through 4, **characterized in that** the tube (46) is formed as a wrap or wound tube of glass fiber reinforced plastic.

6. Anchoring element according to one of Claims 1 through 5, **characterized in that** the wedge elements (48, 50) are comprised of glass fiber reinforced plastic.

7. Anchoring element according to one of Claims 1 through 6, **characterized in that** the tube (46) and the wedge elements (48, 50) are provided with transverse bore-holes (34) for the passage-through of securing screws (36) along the sides outside of the lamella end.

8. Anchoring element according to one of Claims 1 through 7, **characterized in that** the tube fitted with the wedge elements (48, 50) include an end section (44) having a reduced thickness and/or breadth towards the lamella entry side end.

9. Anchoring element according to one of Claims 1 through 8, **characterized in that** the anchor plates (18) are elastically bendable and ductile at least in the entry area (42, 44) of the flat strip lamella (10) and that the stiffness in the end section (44) of the anchor plate (18) steadily decreases going towards the entry side (42) of the flat strip lamella.

10. Anchoring element according to one of Claims 1 through 9, **characterized in that** the lamella ends respectively exhibit a widening and/or thickening (21) and that the anchor plates (18) are provided with a recess (32) for form-fitting reception of the widening and/or thickening (21).

11. Anchoring element according to one of Claims 1 through 10, **characterized in that** the anchor plates (18) are comprised of a thin-walled, externally flat floor part (19) and a, in comparison to the floor part, thick-walled cover part (20).

12. Anchoring element according to Claim 11, **characterized in that** the anchor plate extends at least over the breadth of the lamella.

13. Anchoring element according to one of Claims 10 through 12, **characterized in that** the widening and/or thickening (21) is formed by a divergent splitting apart of the reinforcing fibers (26) at the lamella free end.

14. Anchoring element according to one of Claims 10 through 13, **characterized in that** the widening and/or thickening (21) is formed by a widening of the binder matrix (28').

15. Anchoring element according to one of Claims 10 through 14, **characterized in that** the widening and/or thickening (21) is formed by an application or overlay of material, preferably of synthetic resin.

16. Anchoring element according to one Claims 1 through 15, **characterized in that** the anchor plates (18) are provided with transverse bore holes (34) for the passage-through of high-strength securing screws (36).

17. Anchoring element according to one of Claims 11 through 16, **characterized in that** the wall thickness and/or the breadth of the cover part (20) and/or the floor part (19) in the end section (44) of the anchor plate (18) declines going towards the flat strip lamella entry side (42).

18. Anchoring element according to one of Claims1 through 17, **characterized in that** the anchor plates (18) are provided with an anchoring segment (40) adjacent to the end segment (44), which is provided with transverse bore holes (34) for passage through of the anchoring screws (36) along the sides outside of the there secured lamella ends.

19. Anchoring element according to one of Claims 11 through 18, **characterized in that** the wall thickness of the floor part (19) of the anchoring plate (18) at the lamella entry point (42) corresponds to the layer thickness of the adjacent adhesive layer (16).

20. Anchoring element according to one of Claims 1 through 19, **characterized in that** the flat strip lamella is heatable by an electric current.

21. Anchoring element according to Claim 20, **characterized in that** the anchor plates (18) are electrically conductive and form a contact point for the connection of the reinforcing fibers, which preferably are comprised of carbon fiber (20), to the electrical current source (22).

22. Anchoring element according to one of Claims 1 through 21, **characterized in that** at least one of the anchor plates (18) exhibit shoulders serving as abutment for tensioning devices engaging in the lamella longitudinal direction.

23. Anchoring element according to one of Claims 1 through 22, **characterized in that** the binder matrix is comprised of a duroplast, preferably of epoxy resin.

24. Anchoring element according to one of Claims 1 through 23, **characterized in that** the binder matrix is comprised of a thermoplast, preferably selected from the group consisting of polyolefin, vinyl polymer, polyamide, polyester, polyacetate, polycarbonate, and thermoplastic polyurethane.

25. Anchoring element according to one of Claims 1 through 24, **characterized in that** the reinforcing fibers (26) are comprised of carbon fibers, aramid fibers, glass fibers, and/or polypropylene fibers.

26. Anchoring element according to one of Claims 1 through 25, **characterized in that** the reinforcing fibers (26) are comprised of carbon fibers, aramid fibers, glass fibers, and/or polypropylene fibers.

27. Method for securing a reinforcing element according to one of Claims 1 to 26 to the outer surface of a structural component (12), wherein a broad side of the flat strip lamella (10) is pressed against the structural component surface via an adhesive layer (16) applied in a viscous consistency, preferably a reaction or curing resin, and the adhesive layer is hardened with formation of an adhesive bonding, and wherein the lamella ends are force, form, and/or materially connected with an anchor plate (18) and one of the anchor plates (18) is secured to the structural component, **characterized in that** the other anchor plate (18) prior to or after application of the adhesive is engaged with a tensioning mechanism secured to the structural component, and that the flat strip lamella (10) is acted upon with a pull force directed in the lamella longitudinal direction (38) with production of an elastic deformation, and that the flat strip lamella pretensioned in this manner is held or pressed against the structural component surface until hardening of the adhesive.

28. Method for securing a reinforcing element according to one of Claims 1 to 26 to the outer surface of a structural component (12), wherein a broad side of the flat strip lamella (10) is pressed against the structural component surface via an adhesive layer (16) applied in a viscous consistency, preferably a reaction or curing resin, and the adhesive layer is hardened with formation of an adhesive bonding, and wherein the lamella ends are force, form, and/or materially connected with an anchor plate (18), **characterized in that** the anchor plates (18) are first secured to a tension beam with production of an elastic pretension in the flat strip lamella (10), that the tension beam is pressed or held with the adhesive side of the flat strip lamella (10) against the structural component outer surface until the adhesive is hardened, and that subsequently the tension beam is removed from the flat strip lamella.

29. Process according to Claim 27 or 28, **characterized in that** an electrical current is conducted through at least a part of the carbon fiber (26) reinforcing fibers (26) for heating the flat strip lamella (10).

30. Process according to one of Claims 27 through 29, **characterized in that** the lamella ends are widened and/or thickened (21) prior to connecting with the anchor plates (18).

31. Process according to Claim 30, **characterized in that** the carbon fibers (26) at the ends of the previously cut to size flat strip lamellas (10) are freed of the binder matrix (28), preferably using steam, and with the formation of a widening and/or thickening (21) are spread apart and in this condition are fixed with viscous, hardenable binder (28').

32. Process according to Claim 31, **characterized in that** the carbon fibers (26) freed of the binder matrix are split apart divergently towards the free lamella ends.

33. Process according to Claim 30 or 31, **characterized in that** the carbon fibers (26) freed of binder matrix are introduced into a cut-back recess (32) of the anchor plate (18) and there are positionally fixed and anchored with a binder (28) that is viscous, hardenable, at the same time serves as adhesive.

34. Process according to one of Claims 27 through 33, **characterized in that** the second anchor plate (18) after achieving a predetermined pretension (arrow 38) is secured, preferably by screwing, onto the structural component (12) or the tensioning beam.

## Revendications

1. Elément de renforcement pour composants porteurs de charge ou transmetteurs de charge (12) avec une lamelle plate (10) pouvant être fixée sur une surface de composant au moyen d'une couche d'adhésif (16), cette lamelle étant composée d'un grand nombre de fibres porteuses (26), parallèles entre elles et orientées dans le sens de la longueur de la lamelle, noyées dans une matrice liante (28), ladite lamelle plate (10) s'engage par chacune de ses extrémités libres dans une patte d'ancrage (18) ancrable au moyen d'organes de fixation (36) sur le composant (12) ou sur une poutre de serrage et est assurée sur celui-ci/celle-ci contre les efforts de traction et de cisaillement agissant dans le sens de la longueur de la lamelle, **caractérisé par le fait que** les pattes d'ancrage (18) présentent un tube (46) au moins partiellement flexible et deux éléments en coin (48, 50) enfoncés dans le tube (46) et que l'extrémité de lamelle respective est serrée entre les surfaces en coin (52, 54) tournées l'une vers l'autre et collée avec celles-ci.

2. Elément de renforcement selon la revendication 1, **caractérisé par le fait que** les éléments en coin (48, 50) sont collés dans le tube (46).

3. Elément de renforcement selon la revendication 1 ou 2, **caractérisé par le fait que** les surfaces en coin (52, 54) tournées l'une vers l'autre sont incurvées l'une par rapport à l'autre de manière complémentaire dans le sens de la longueur de la lamelle.

4. Elément de renforcement selon l'une des revendications 1 à 3, **caractérisé par le fait que** l'un des deux éléments en coin (48) s'étend seulement sur une partie de la longueur du tube et que l'autre élément en coin (50) présente une surface partielle (58) se raccordant à sa surface en coin (54) de manière préférentiellement tangentielle, tenant la lamelle plate contre une paroi de tube côté composant (56) et collée et/ou retenue avec celle-ci et avec la lamelle plate.

5. Elément de renforcement selon l'une des revendications 1 à 4, **caractérisé par le fait que** le tube (46) est formé d'un tube enroulé en plastique renforcé aux fibres de verre.

6. Elément de renforcement selon l'une des revendications 1 à 5, **caractérisé par le fait que** les éléments en coin (48, 50) sont en plastique renforcé aux fibres de verre.

7. Elément de renforcement selon l'une des revendications 1 à 6, **caractérisé par le fait que** le tube (46) et les éléments en coin (48, 50) sont pourvus de trous transversaux (34) situés sur le côté, en dehors de l'extrémité de lamelle, pour le passage de vis de fixation (36).

8. Elément de renforcement selon l'une des revendications 1 à 7, **caractérisé par le fait que** le tube équipé des éléments en coin (48, 50) présente une section terminale (44) d'épaisseur et/ou de largeur décroissante vers l'extrémité côté entrée.

9. Elément de renforcement selon l'une des revendications 1 à 8, **caractérisé par le fait que** les pattes d'ancrage (18) sont élastiquement flexibles et extensibles au moins dans la zone d'entrée (42, 44) de la lamelle plate (10) et que dans une section terminale (44) des pattes d'ancrage (18) la rigidité diminue continuellement vers le point d'entrée (42) de la lamelle plate.

10. Elément de renforcement selon l'une des revendications 1 à 9, **caractérisé par le fait que** les extrémités de lamelle présentent chacune un élargissement et/ou un épaississement (21) et les pattes d'ancrage (18) une entaille (32) pour le blocage mécanique de l'élargissement et/ou de l'épaississement (21).

11. Elément de renforcement selon l'une des revendications 1 à 10, **caractérisé par le fait que** les pattes d'ancrage (18) présentent une partie inférieure mince (19), extérieurement plane, et une partie supérieure (20) plus épaisse que la partie inférieure.

12. Elément de renforcement selon la revendication 11, **caractérisé par le fait que** les pattes d'ancrage s'étendent au moins sur la largeur de la lamelle.

13. Elément de renforcement selon l'une des revendications 10 à 12, **caractérisé par le fait que** l'élargissement et/ou l'épaississement (21) est formé par écartement divergent des fibres porteuses (26) vers l'extrémité libre de la lamelle.

14. Elément de renforcement selon l'une des revendications 10 à 13, **caractérisé par le fait que** l'élargissement et/ou l'épaississement (21) est formé par un évasement de la matrice liante (28').

15. Elément de renforcement selon l'une des revendications 10 à 14, **caractérisé par le fait que** l'élargissement et/ou l'épaississement (21) est formé par un apport de matière, de préférence en matière plastique.

16. Elément de renforcement selon l'une des revendications 1 à 15, **caractérisé par le fait que** les pattes d'ancrage (18) sont pourvues de trous transversaux (34) pour le passage de vis de fixation (36) à haute résistance.

17. Elément de renforcement selon l'une des revendications 1 à 16, **caractérisé par le fait que** l'épaisseur de paroi et/ou la largeur de la partie supérieure (20) et/ou de la partieinférieure (19) diminuent dans la section terminale (44) de la patte d'ancrage (18) vers le point d'entrée (42) de la lamelle plate.

18. Elément de renforcement selon l'une des revendications 1 à 17, **caractérisé par le fait que** les pattes d'ancrage (18) présentent une section d'ancrage (40) adjacente à la section terminale (44), pourvue de trous transversaux (34) situés sur le côté, en dehors de l'extrémité de lamelle qui y est fixée, pour le passage des vis d'ancrage (36).

19. Elément de renforcement selon l'une des revendications 11 à 18, **caractérisé par le fait que** l'épaisseur de paroi de la partie inférieure (19) des pattes d'ancrage (18) au point d'entrée (42) correspond à l'épaisseur de la couche d'adhésif (16) adjacente.

20. Elément de renforcement selon l'une des revendications 1 à 19, **caractérisé par le fait que** la lamelle plate peut être chauffée par un courant électrique.

21. Elément de renforcement selon la revendication 20, **caractérisé par le fait que** les pattes d'ancrage (18) sont électroconductrices et forment un point de contact pour le raccordement des fibres porteuses composées de préférences de fibres de carbone (26) à une source de courant électrique (22).

22. Elément de renforcement selon l'une des revendications 1 à 21, **caractérisé par le fait qu'**au moins une des pattes d'ancrage (18) présente un épaulement servant de point d'appui pour un dispositif de serrage agissant dans le sens de la longueur de la lamelle.

23. Elément de renforcement selon l'une des revendications 1 à 22, **caractérisé par le fait que** la matrice liante est en résine thermodurcissable, de préférence en résine époxy.

24. Elément de renforcement selon l'une des, revendications 1 à 23, **caractérisé par le fait que** la matrice liante est en matière thermoplastique, de préférence du groupe polyoléfines, polymères vinyliques, polyamides, polyesters, polyacétates, polycarbonates et polyuréthanes thermoplastiques.

25. Elément de renforcement selon l'une des revendications 1 à 24, **caractérisé par le fait que** les fibres porteuses (26) sont formées de fibres de carbone, de fibres aramides, de fibres de verre et/ou de fibres de polypropylène.

26. Elément de renforcement selon l'une des revendications 1 à 25, **caractérisé par le fait que** les fibres porteuses (26) sont formées de fibres de carbone, de fibres aramides, de fibres de verre et/ou de fibres de polypropylène.

27. Procédé pour la fixation d'un élément de renforcement selon l'une des revendications 1 à 26 à la surface d'un composant (12), dans lequel la lamelle plate (10) est pressée par son côté large contre une surface du composant par l'entremise d'une couche d'adhésif (16), composée de préférence d'une résine réactive, appliquée sous forme visqueuse, la couche d'adhésif durcissant en établissant une liaison collée, et dans lequel les extrémités de lamelle sont d'abord assemblées, à blocage par force, forme ou matière, avec une patte d'ancrage (18) et une des pattes d'ancrage (18) est fixée sur le composant, **caractérisé par le fait que** l'autre patte d'ancrage (18) est, avant ou après l'application d'adhésif, saisie par un mécanisme de serrage installé sur le composant et soumise à une contrainte de tension dirigée dans le sens de la longueur de la lamelle (38) pour générer une déformation élastique dans la lamelle plate (10), et que la lamelle plate ainsi précontrainte, munie de sa couche d'adhésif (16), est tenue ou pressée contre la surface du composant jusqu'à durcissement de l'adhésif.

28. Procédé pour la fixation d'un élément de renforcement selon l'une des revendications 1 à 26 à la surface d'un composant (12), dans lequel la lamelle plate (10) est pressée par son côté large contre une surface du composant par l'entremise d'une couche d'adhésif (16), composée de préférence d'une résine réactive, appliquée sous forme visqueuse, la couche d'adhésif durcissant en établissant une liaison collée, et dans lequel les extrémités de lamelle sont d'abord assemblées, à blocage par force, forme ou matière, avec une patte d'ancrage (18), **caractérisé par le fait que** les pattes d'ancrage (18) sont d'abord fixées sur une poutre de serrage en générant une précontrainte élastique dans la lamelle plate, que la poutre de serrage, avec le côté encollé de la lamelle plate (10), est pressée ou tenue contre la surface du composant jusqu'à ce que l'adhésif ait durci et que la poutre de serrage est ensuite enlevée de la lamelle plate.

29. Procédé selon la revendication 27 ou 28, **caractérisé par le fait qu'**un courant électrique est envoyé pendant le durcissement de l'adhésif (16) au moins à travers une partie des fibres porteuses (26) formées de fibres de carbone (26) pour chauffer la lamelle plate (10) et la couche d'adhésif (16).

30. Procédé selon l'une des revendications 27 à 29, **caractérisé par le fait que** les extrémités de lamelle sont munies d'un élargissement et/ou d'un épaississement (21) avant l'assemblage avec les pattes d'ancrage (18).

31. Procédé selon la revendication 30, **caractérisé par le fait que** les fibres de carbone (26) sont libérées aux extrémités de la lamelle plate (10) préalablement mise à longueur de la matrice liante, de préférence par passage à la vapeur, écartées en formant un élargissement et/ou un épaississement (21) et fixées dans cette position avec un liant (28') visqueux durcissable.

32. Procédé selon la revendication 31, **caractérisé par le fait que** les fibres de carbone (26) libérées de la matrice liante sont écartées de façon divergente vers l'extrémité libre de la lamelle.

33. Procédé selon la revendication 30 ou 31, **caractérisé par le fait que** les fibres de carbone (26) libérées de la matrice liante sont introduites dans une entaille (32) en contre-dépouille des pattes d'ancrage (18) et y sont fixées en position et ancrées avec un liant (28') visqueux durcissable servant en même temps d'adhésif.

34. Procédé selon l'une des revendications 27 à 33, **caractérisé par le fait que** la deuxième patte d'ancrage (18), après atteinte d'une force de précontrainte définie (flèche 38), est fixée, de préférence vissée, sur le composant (12) ou sur la poutre de serrage.
